# EUROPEAN PATENT APPLICATION

(11) **EP 3 751 814 A1**
(43) Date of publication of application: **16.12.2020**
(21) Application number: 19180238.8
(22) Date of filing: 14.06.2019
(51) Int. Cl.: H04L 29/06, H04L 9/08, H04L 9/32, H04W 12/08, H04L 29/08, H04W 12/04

(54) **PERFORMING A CRYPTOGRAPHIC OPERATION IN A WEB BROWSER**

(71) Applicant: Assa Abloy AB, 107 23 Stockholm (SE)
(72) Inventor: OLSSON, Håkan, 126 48 Hägersten (SE); LUNDBERG, Frans, 133 35 Saltsjöbaden (SE)
(74) Representative: Kransell & Wennborg KB

(57) **Abstract**

It is provided a method for performing a cryptographic operation, the method being performed in a user device comprising a web browser. The method comprises the steps of: generating within the web browser a temporary key pair being a cryptographic key pair comprising a public key and a secret key; requesting a delegation assigning a right for the temporary key pair to perform a cryptographic operation on behalf of the user; receiving a delegation assigning a right for the temporary key pair to perform a cryptographic operation on behalf of the user; and performing a cryptographic operation on behalf of the user for data communicated with a web server based on the secret key of the temporary key pair.

## Description

### TECHNICAL FIELD

The present disclosure relates to the field of cryptographic operations and in particular to performing a cryptographic operation in a web browser.

### BACKGROUND

Web browsers are used to perform tasks that are increasingly sensitive. This can require cryptographic operations, such as applying a cryptographic signature to verify the authenticity of the user of the web browser. However a web browser cannot be generally trusted. A username and password combination is a very weak indicator of the real identity of a user.

In the prior art, cryptographic operations can be performed in separate software applications (or apps) or using specific hardware. The known solutions are complicated and not convenient for the user. Whenever a secure solution is not convenient, there is a risk that the user finds another less secure, but more convenient, solution.

### SUMMARY

One objective is to provide a way to perform secure cryptographic operations in a web browser which is more convenient than today.

According to a first aspect, it is provided a method for performing a cryptographic operation, the method being performed in a user device comprising a web browser. The method comprises the steps of: generating within the web browser a temporary key pair being a cryptographic key pair comprising a public key and a secret key; requesting a delegation assigning a right for the temporary key pair to perform a cryptographic operation on behalf of the user; receiving a delegation assigning a right for the temporary key pair to perform a cryptographic operation on behalf of the user; and performing a cryptographic operation on behalf of the user for data communicated with a web server based on the secret key of the temporary key pair.

The cryptographic operation may be to apply a cryptographic signature.

The step of requesting a delegation may comprise presenting an optical code comprising the request, the optical code being readable by a personal device.

The step of requesting a delegation may comprise sending the request to a personal device over web Bluetooth.

The step of requesting a delegation may comprise sending the request internally within the user device.

In the step of receiving a delegation, the delegation may be cryptographically signed by a long-term cryptographic key pair of the user.

In the step of receiving a delegation, the delegation may comprise a validity time.

According to a second aspect, it is provided a user device for performing a cryptographic operation. The user device comprises: a processor; and a memory storing instructions that, when executed by the processor, cause the user device to: generate, within a web browser of the user device, a temporary key pair being a cryptographic key pair comprising a public key and a secret key; request a delegation assigning a right for the temporary key pair to perform a cryptographic operation on behalf of the user; receive a delegation assigning a right for the temporary key pair to perform a cryptographic operation on behalf of the user; and perform a cryptographic operation on behalf of the user for data communicated with a web server based on the secret key of the temporary key pair.

The cryptographic operation may be to apply a cryptographic signature.

The instructions to request a delegation may comprise instructions that, when executed by the processor, cause the user device to present an optical code comprising the request, the optical code being readable by a personal device.

The instructions to request a delegation may comprise instructions that, when executed by the processor, cause the user device to sending the request to a personal device over web Bluetooth.

The instructions to request a delegation may comprise instructions that, when executed by the processor, cause the user device to send the request internally within the user device.

The delegation may comprises a validity time.

According to a third aspect, it is provided a computer program for performing a cryptographic operation. The computer program comprises computer program code which, when run on a user device causes the user device to: generate, within a web browser of the user device, a temporary key pair being a cryptographic key pair comprising a public key and a secret key; request a delegation assigning a right for the temporary key pair to perform a cryptographic operation on behalf of the user; receive a delegation assigning a right for the temporary key pair to perform a cryptographic operation on behalf of the user; and perform a cryptographic operation on behalf of the user for data communicated with a web server based on the secret key of the temporary key pair.

According to a fourth aspect, it is provided a computer program product comprising a computer program according to the third aspect and a computer readable means on which the computer program is stored.

Generally, all terms used in the claims are to be interpreted according to their ordinary meaning in the technical field, unless explicitly defined otherwise herein. All references to "a/an/the element, apparatus, component, means, step, etc." are to be interpreted openly as referring to at least one instance of the element, apparatus, component, means, step, etc., unless explicitly stated otherwise. The steps of any method disclosed herein do not have to be performed in the exact order disclosed, unless explicitly stated.

### BRIEF DESCRIPTION OF THE DRAWINGS

Aspects and embodiments are now described, by way of example, with reference to the accompanying drawings, in which:
Figs 1A-B are schematic diagrams illustrating environments in which embodiments presented herein can be applied;
Fig 2 is a schematic diagram of an optical code used by the user device of Figs 1A-B to request a delegation;
Fig 3 is a sequence diagram illustrating communication between various entities of embodiments which can be applied in the environment of Figs 1A-B;
Fig 4 is a flow chart illustrating embodiments of methods for performing a cryptographic operation;
Fig 5 is a schematic diagram illustrating components of the user device of Figs 1A-B according to one embodiment; and
Fig 6 shows one example of a computer program product comprising computer readable means.

### DETAILED DESCRIPTION

The aspects of the present disclosure will now be described more fully hereinafter with reference to the accompanying drawings, in which certain embodiments of the invention are shown. These aspects may, however, be embodied in many different forms and should not be construed as limiting; rather, these embodiments are provided by way of example so that this disclosure will be thorough and complete, and to fully convey the scope of all aspects of invention to those skilled in the art. Like numbers refer to like elements throughout the description.

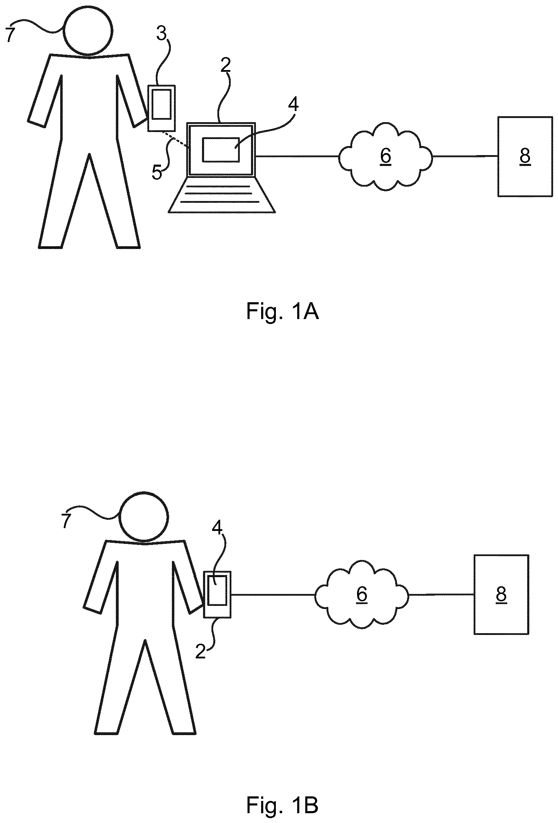

Figs 1A-B are schematic diagrams illustrating environments in which embodiments presented herein can be applied. First, the environment shown in Fig 1A will be described.

A user 7 interacts with a user device 2 to access functions made available by a web server 8. The web server is here a functional entity and represents functionality provided through a web service. The web server can thus be implemented by one or several physical devices in one geographical location or spread across different geographical locations. The user device 2 and the web server 8 communicate over a communication network 6, which can e.g. include the Internet and/or a cellular network e.g. LTE (Long Term Evolution), NR (New Radio), W-CDMA (Wideband Code Division Multiple Access). In order to access the functionality made available by the web server 8, the user 7 interacts with a web browser 4 of the user device 2.

The user device 2 can be implemented using any device capable of providing a web browser 4, e.g. a television, a desktop computer, a laptop computer, a tablet computer, a smartphone, or even a wearable device.

In the embodiment of Fig 1A, the user has further access to a personal device 3. The personal device 3 contains a long-term cryptographic key pair of the user 7. The user device 2 (and the web browser 4 of the user device 2) can communicate with the personal device 3 over a local communication link 5. The personal device 3 can e.g. be implemented as a smartphone, wearable device, tablet computer, laptop computer or desktop computer. The local communication link 5 can for instance be based on Web Bluetooth, using which a web browser (as requested by the web server 8) can communicate wirelessly with local devices using a local Bluetooth link. Alternatively or additionally, the local communication link 5 can be based on NFC (Near-Field Communication). Alternatively or additionally, the local communication link 5 can be based on optical codes or any other suitable local communication. The local communication link 5 can be used by the web browser 4 to request a delegation (from the long-term cryptographic key pair) of a right to perform a cryptographic operation on behalf of the user 7.

As explained in more detail below, the web browser 4 generates a temporary key pair, which (when approved by the user 7) is assigned rights by the long-term cryptographic key pair. This allows the web browser 4 to conveniently and securely perform cryptographic operations on behalf of the user 7.

Looking now to Fig 1B, the long-term cryptographic key pair is here provided in the user device 2. In this way, the web browser 4 can communicate with the device holding the long-term cryptographic key pair using internal communication instead of using the local communicating link 5. The personal device can thus be considered to be implemented by the user device 2.

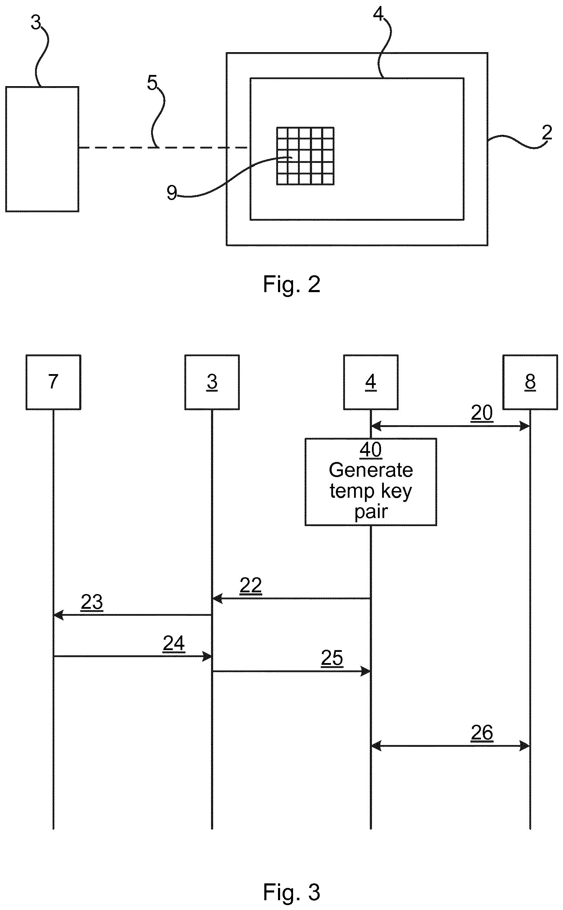

Fig 2 is a schematic diagram showing of an optical code 9 used by the user device 2 of Figs 1A-B to request a delegation. The web browser 4 is here shown displaying the optical code 9 which contains a request to assign a right for the temporary key pair to perform a cryptographic operation on behalf of the user 7. With reference to Fig 1A, this implements the local communication link 5, by allowing a camera of the personal device 3 to capture the optical code and to thereby receive the request.

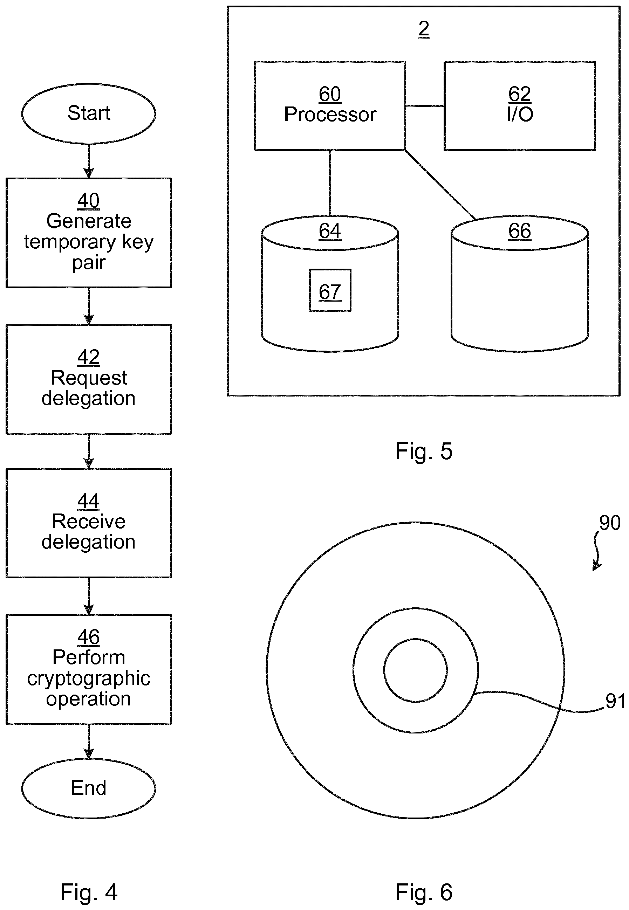

Fig 3 is a sequence diagram illustrating communication between various entities of embodiments which can be applied in the environment of Figs 1A-B. Fig 3 is shown with the personal device 3, corresponding to the embodiment shown in Fig 1A. However, the actions of the personal device 3 of Fig 4 can equally well be performed by appropriate software and hardware of the user device 2, e.g. when the embodiment shown in Fig 1B is used.

First, the web browser 4 (of the user device 2) and the web server 8 establish a connection 20. The connection can be a secure connection e.g. based on TLS (Transport Layer Security) or similar.

Based on code (e.g. JavaScript or other browser-executed code) transferred over the connection 20 from the web server 8, the web browser 4 generates 40 a temporary key pair. The temporary key pair is a cryptographic key pair comprising a private key and a public key. At this point, the temporary key pair does not represent the user.

The web browser 4 then sends a request 22 to the personal device 3 (the device that contains the long-term cryptographic key pair) to assign rights to the temporary key pair to perform cryptographic operations on behalf of the user. The request 22 contains the public key of the temporary key pair.

The personal device 3 then asks the user 7 for permission to assign the rights to the temporary key pair, which the user 7 approves 24, since the user is the party that interacts with the web browser 4 to trigger this process. If the user does not approve, the sequence ends.

The personal device 3 is now ready to create a delegation which assigns the right for the temporary key pair to perform a cryptographic operation on behalf of the user and transmits this delegation 25 to the web browser 4. Optionally, if the personal device 3 is unable to communicate directly with the web browser 4, the personal device 3 can e.g. transmit the delegation to an intermediate server (not shown) which can then forward the delegation to the web browser 4.

At this point, the web browser 4 has received the delegation with its assigned rights and can perform 26 cryptographic operations with the web server 8 on behalf of the user 7 using the temporary key pair. The web server 8 verifies that the temporary key pair indeed has authority to act on behalf of the user, using the delegation and the public key of the temporary key pair (received from the web browser 4). The validity of the signature of the long-term cryptographic key pair can be verified using its long-term public key. The long-term public key is trusted by the web server 8, e.g. using a certificate authority hierarchy or by the user having supplied the long-term public key when the account for the user was created on the web server 8. Alternatively, the public key is supplied in e-mails from the user and/or is published on a web site of the user.

Fig 4 is a flow chart illustrating embodiments of methods for performing a cryptographic operation. The method is performed in the user device of Figs 1A-B and generally corresponds to the actions of the web browser of Fig 3. The user device contains the web browser 4.

In a *generate temporary key pair* step 40, the user device generates a temporary key pair. The temporary key pair is a cryptographic key pair comprising a public key and a secret key. The generation of the temporary key pair is performed within the web browser of the user device.

In a *request delegation* step 42, the user device requests a delegation assigning a right for the temporary key pair to perform a cryptographic operation on behalf of the user. The request contains the public key of the temporary key pair as an identifier of the temporary key pair.

The request can be transmitted by presenting an optical code comprising the request. The optical code is then readable by a personal device.

Alternatively, the request can by transmitted by sending the request to the personal device over web Bluetooth.

Alternatively, in accordance with the embodiment of Fig 1B, the request is transmitted by sending the request internally within the user device. The receiver of the request can then be a particular application (app) of the user device.

In a *receive delegation* step 44, the user device receives a delegation assigning a right for the temporary key pair to perform a cryptographic operation on behalf of the user. The delegation can be in the form of a data item that specifies that the long-term key pair (represented by its public key) assigns a right for the temporary key pair (represented by its public key) to perform one or more cryptographic operations on behalf of the user. The delegation can be cryptographically signed by a long-term cryptographic key pair (or more specifically the long-term private key) of the user.

Optionally, the delegation comprises a validity time. This validity time can be significantly shorter than the validity time of the long-term cryptographic key pair. For instance, the validity of the delegation can be as short as an hour or a number of hours. This allows the web browser to conveniently be used for cryptographic operations during the validity time, but where this right expires with the validity time to keep security high. Optionally, further restrictions can be included in the delegation, further defining conditions under which the delegation is valid.

In a *perform cryptographic operation* step 46, the user device performs a cryptographic operation on behalf of the user for data communicated with a web server, based on the secret key of the temporary key pair. The cryptographic operation can e.g. be to apply a cryptographic signature. This step can also comprise to provide the delegation to the web server, allowing the web server to verify the authority of the temporary key-pair to act on behalf of the user. The delegation can then be in the form of the data item described above. Optionally, the same temporary key pair can be used for cryptographic operations for multiple web servers.

Using embodiments presented herein, a web browser can conveniently be used by the user to perform cryptographic operations, such as cryptographic signing. The web browser can be any suitable web browser accessible to the user and does not need any prior installation or preparation. From the user perspective, the process is very convenient - use the web browser to navigate to the desired web server, approve access to the web browser using a personal device (which can be the same as the user device or a different device), and perform the cryptographic operations using the web browser. The next time the user needs to perform a similar operation, the user is not bound to the web browser used previously; any web browser on any device can be used. Since the solution is based on a web browser, no additional software needs to be installed for the user to be able to perform the cryptographic operation. Additionally, embodiments presented herein do not require the long-term cryptographic key pair to be revealed or copied/communicated to any other device than where it is securely stored.

Fig 5 is a schematic diagram illustrating components of the user device 2 of Figs 1A-B. A processor 60 is provided using any combination of one or more of a suitable central processing unit (CPU), multiprocessor, microcontroller, digital signal processor (DSP), etc., capable of executing software instructions 67 stored in a memory 64, which can thus be a computer program product. The processor 60 could alternatively be implemented using an application specific integrated circuit (ASIC), field programmable gate array (FPGA), etc. The processor 60 can be configured to execute the method described with reference to Fig 4 above.

The memory 64 can be any combination of random-access memory (RAM) and/or read only memory (ROM). The memory 64 also comprises persistent storage, which, for example, can be any single one or combination of magnetic memory, optical memory, solid-state memory or even remotely mounted memory.

A data memory 66 is also provided for reading and/or storing data during execution of software instructions in the processor 60. The data memory 66 can be any combination of RAM and/or ROM.

The user device 2 further comprises an I/O interface 62 for communicating with external entities such as the web server 8. The I/O interface 62 also includes a user interface, comprising a screen an input device, such as touch ability of the screen, pointer device (mouse/trackpad) and/or keyboard.

Other components of the user device 2 are omitted in order not to obscure the concepts presented herein.

Fig 6 shows one example of a computer program product 90 comprising computer readable means. On this computer readable means, a computer program 91 can be stored, which computer program can cause a processor to execute a method according to embodiments described herein. In this example, the computer program product is an optical disc, such as a CD (compact disc) or a DVD (digital versatile disc) or a Blu-Ray disc. As explained above, the computer program product could also be embodied in a memory of a device, such as the computer program product 64 of Fig 5. While the computer program 91 is here schematically shown as a track on the depicted optical disk, the computer program can be stored in any way which is suitable for the computer program product, such as a removable solid-state memory, e.g. a Universal Serial Bus (USB) drive.

The aspects of the present disclosure have mainly been described above with reference to a few embodiments. However, as is readily appreciated by a person skilled in the art, other embodiments than the ones disclosed above are equally possible within the scope of the invention, as defined by the appended patent claims. Thus, while various aspects and embodiments have been disclosed herein, other aspects and embodiments will be apparent to those skilled in the art. The various aspects and embodiments disclosed herein are for purposes of illustration and are not intended to be limiting, with the true scope and spirit being indicated by the following claims.

## Claims

1. A method for performing a cryptographic operation, the method being performed in a user device (2) comprising a web browser, the method comprising the steps of:
generating (40) within the web browser a temporary key pair being a cryptographic key pair comprising a public key and a secret key;
requesting (42) a delegation assigning a right for the temporary key pair to perform a cryptographic operation on behalf of the user (7);
receiving (44) a delegation assigning a right for the temporary key pair to perform a cryptographic operation on behalf of the user (7); and
performing (46) a cryptographic operation on behalf of the user (7) for data communicated with a web server based on the secret key of the temporary key pair.

2. The method according to claim 1, wherein the cryptographic operation is to apply a cryptographic signature.

3. The method according to claim 1 or 2, wherein the step of requesting (42) a delegation comprises presenting an optical code comprising the request, the optical code being readable by a personal device (3).

4. The method according to claim 1 or 2, wherein the step of requesting (42) a delegation comprises sending the request to a personal device (3) over web Bluetooth.

5. The method according to claim 1 or 2, wherein the step of requesting (42) a delegation comprises sending the request internally within the user device (2).

6. The method according to any one of the preceding claims, wherein, in the step of receiving (44) a delegation, the delegation is cryptographically signed by a long-term cryptographic key pair of the user (7).

7. The method according to any one of the preceding claims, wherein, in the step of receiving (44) a delegation, the delegation comprises a validity time.

8. A user device (2) for performing a cryptographic operation, the user device (2) comprising:
a processor (60); and
a memory (64) storing instructions (67) that, when executed by the processor, cause the user device (2) to:
generate, within a web browser of the user device, a temporary key pair being a cryptographic key pair comprising a public key and a secret key;
request a delegation assigning a right for the temporary key pair to perform a cryptographic operation on behalf of the user (7);
receive a delegation assigning a right for the temporary key pair to perform a cryptographic operation on behalf of the user (7); and
perform a cryptographic operation on behalf of the user (7) for data communicated with a web server based on the secret key of the temporary key pair.

9. The user device (2) according to claim 8, wherein the cryptographic operation is to apply a cryptographic signature.

10. The user device (2) according to claim 8 or 9, wherein the instructions to request a delegation comprise instructions (67) that, when executed by the processor, cause the user device (2) to present an optical code comprising the request, the optical code being readable by a personal device (3).

11. The user device (2) according to claim 8 or 9, wherein the instructions to request a delegation comprise instructions (67) that, when executed by the processor, cause the user device (2) to sending the request to a personal device (3) over web Bluetooth.

12. The user device (2) according to claim 8 or 9, wherein the instructions to request a delegation comprise instructions (67) that, when executed by the processor, cause the user device (2) to send the request internally within the user device (2).

13. The user device (2) according to any one of claims 8 to 12, wherein the delegation comprises a validity time.

14. A computer program (67, 91) for performing a cryptographic operation, the computer program comprising computer program code which, when run on a user device (2) causes the user device (2) to:
generate, within a web browser of the user device, a temporary key pair being a cryptographic key pair comprising a public key and a secret key;
request a delegation assigning a right for the temporary key pair to perform a cryptographic operation on behalf of the user (7);
receive a delegation assigning a right for the temporary key pair to perform a cryptographic operation on behalf of the user (7); and
perform a cryptographic operation on behalf of the user (7) for data communicated with a web server based on the secret key of the temporary key pair.

15. A computer program product (64, 90) comprising a computer program according to claim 14 and a computer readable means on which the computer program is stored.
